Europäisches Patentamt

European Patent Office

Office européen des brevets

(19)

(11) Publication number: **0 475 229 A2**

# EUROPEAN PATENT APPLICATION

(21) Application number: **91114716.3**

(22) Date of filing: **02.09.91**

(51) Int. Cl.⁵: **G03G 15/00, G03B 27/62**

(30) Priority: **09.09.90 DE 4028643**

(43) Date of publication of application:
**18.03.92 Bulletin 92/12**

(84) Designated Contracting States:
**DE FR GB IT**

(71) Applicant: **LICINVEST AG**
**Bahnhofstrasse 54**
**CH-7302 Landquart(CH)**

(72) Inventor: **Ackeret, Peter**
**Allmendstrasse 18**
**CH-8700 Küsnacht(CH)**

(74) Representative: **Sparing Röhl Henseler**
**Patentanwälte European Patent Attorneys**
**Rethelstrasse 123**
**W-4000 Düsseldorf 1(DE)**

(54) **A container for a stack of sheets.**

(57) A container for a stack of sheets includes a stack-supporting slider in a housing which has a display window. In order to accomodate sheets of different sizes, adapter members are removably mounted on the slider.

Fig. 3

The present invention relates to a container for a stack of sheets. Such sheets may be photographic prints or the like. The container comprises a housing and a slider reciprocble relative to the housing in a direction parallel to a display window provided in the housing so as to expose an uppermost sheet of the stack when the slider is fully pushed home into the housing. The slider permits removal of at least one sheet from the housing. Such a container may be designed as a "sheet exchanger" wherein a stack of sheets can be cyclically rearranged upon repeated reciprocation of the slider. Such a sheet exchanger is disclosed e.g. in U.S. patent 4,754,564.

Certain types of sheets are produced in standard sizes or formats. In particular, a commonly used photoprint size is 90 by 130 mm$^2$, and containers or sheet exchangers adapted to this size may be cheaply produced utilizing techniques as injection molding. However, some photo processers cut the prints to a size of 90 by 127 mm$^2$ or 3.5 by 5 sqare inches. While a container which accomodates the larger size can, of course, accomodate the "undersized" prints, too, the latter may lie misaligned beneath the display window.

It is the object of the present invention to provide a sheet container permitting storage and display of prints or the like and wherein even undersized sheets may be exposed in alignment with the display window. It is a further object of the invention to provide such a sheet container which may be used at will for the one or other sheet size.

According to the invention, the container comprises a substantially rectangular or epipedic housing which has a display window slightly smaller than the size of a sheet to be exposed. A slider holds a stack of sheets and is reciprocable relative to the housing in a reciprocation direction parallel to the display window. The slider has stops adapted to the size of the sheets so as to align them with respect to the window. If the container is loaded with sheets of a smaller nominal size, the stops may be modified so that these smaller sheets may be aligned with the window, too. Preferably, the stops are provided in the form of removably inserted stop members.

A preferred embodiment of the invention is illustrated in the attached drawings and will be explained in detail with reference thereto.

Fig. 1 and 2 show schematically the principle of the invention,

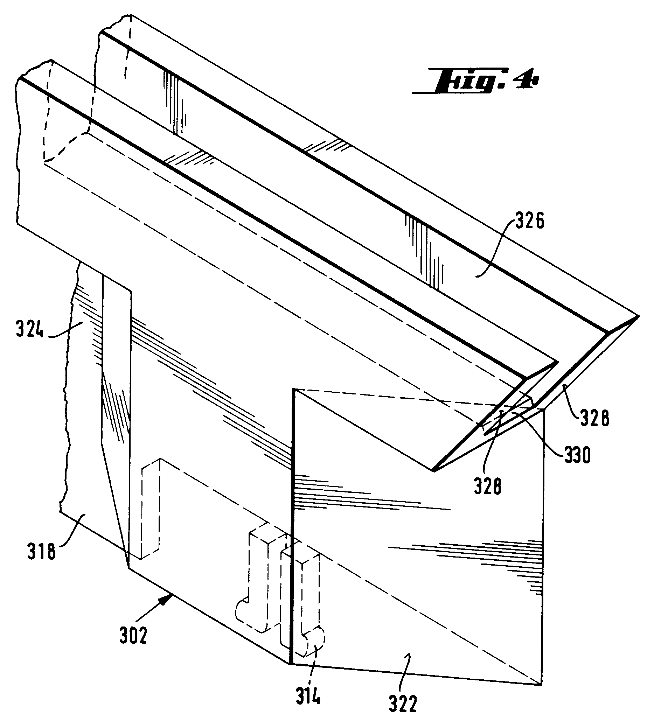

Fig. 3 is an isometric view, partially broken away, of a container in accordance with the invention with the slider near its outer end position and a stop member removed,

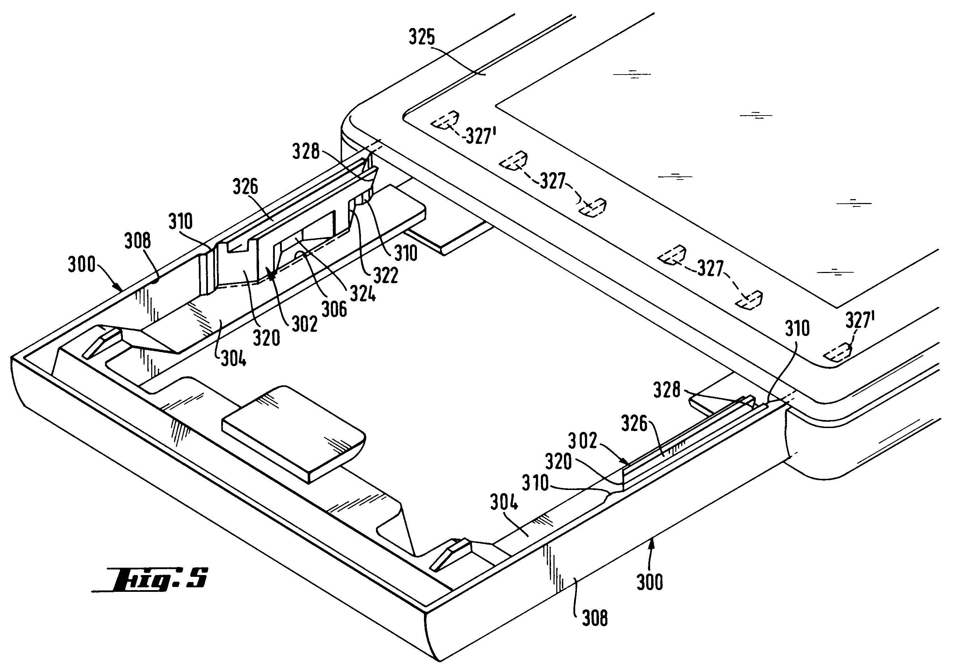

Fig. 4 shows a detail of the stop member in enlarged scale, and

Fig. 5 illustrates in similar fashion to Fig. 3 the container with the stop member mounted in place.

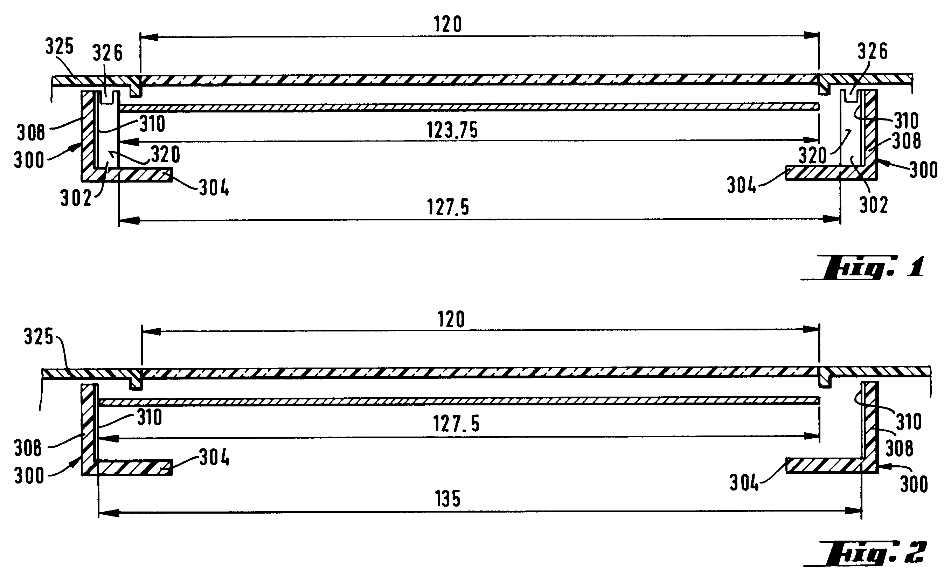

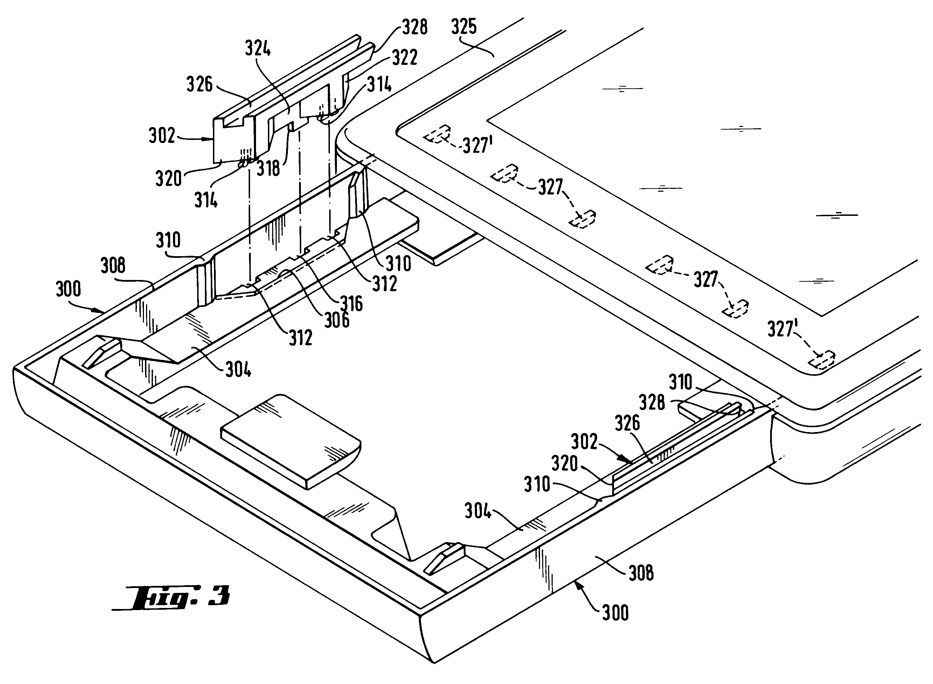

Fig. 1 and 2 illustrate schematically an upper shell 325 of the housing provided with an aperture 200 or display window which, in the embodiment, is provided with a transparent pane 202. The width of the window transverse to the reciprocation direction of the slider is 120 mm. The slider comprises longitudinal edges 300 extending in reciprocation direction and having an L-shaped cross section. Sheet-supporting arms 304 of the ledges extend parallel to the plane of the window 200. The inner ends of arms 304 are spaced by a width such that sheets of minimum size, e.g. 118 mm, are still supported and cannot fall through the open slider bottom. The upstanding arms 308 of the ledges define the space necessary to accomodate sheets of a maximum width indicated to be 135 mm. Fig. 2 shows that even a sheet or photo print having a width of 127.5 mm fully fills the display window although is is somewhat misaligned when abutting one of the upstanding arms 308. In Fig. 1, the slider ledges are shown equipped with stop members 302 so as to reduce the width between the arms 308 to about 127.5 mm, and as can be seen in Fig. 1, even a sheet of 123.75 mm width fully fills the display window when abutting one of the stop members 302. Accordingly, the slider may be adapted to hold sheets having a width tolerance between 123.75 and 135 mm.

The illustrated embodiment is a sheet exchanger. That is, upon withdrawal of the slider loaded with a stack of sheets, the lowermost sheet is retained in the housing, and when the slider is pushed back into the housing, this retained sheet is placed on top of the stack. Thus, upon each reciprocation cycle of the slider, the one retained sheet is displaced relative to the slider, and if the slider is provided with the stop members 302, these must not interfere with the exchange function. For this reason they are designed in a particular manner to be described hereinafter.

Each supporting arm 304 of the slider ledges has a recess 306 having a contour which is complementary to the contour of the allocated stop member 302. This prevents the one sheet which is displaced relative to the slider from creeping between the stop member and the sheet-supporting arm. Similarly, guide extensions 310 are integrally molded with the guide arms 308 so as to shield the gap between stop member 302 and arm 308.

The supporting arms 304 each have three asymmetrically arranged apertures within the confines of the recess 306. The two apertures marked 312 receive anchoring hooks 314 integrally formed with the stop members. The third aperture 316 receives a support foot 318 which stabilizes the position of the stop member and further prevents interchanging of the stop members upon their being inserted; this is necessary because the stop members themselves are asymmetric, too.

Each stop member has a front ramp 320 and a rear ramp 322 so as to direct a sheet corner inwards during exchange or filling the slider with a stack of sheets. For the same reason, a finger recess 324 is delimited by similar ramps. This recess permits to remove the stop member by withdrawing it upwards.

Ribs 327 are integrally formed with the upper housing shell 325. One of these ribs, marked 327', is so positioned that it would interfere with the stop member unless the latter would be provided with a groove 326. These ribs serve the purpose to bend downward the end of the one sheet which was retained in the housing during the slider's return stroke so that this sheet end cannot enter between the upstanding arm 308 of the slider edges and the inner face of the housing. Of course, such sheet end must not enter between the upper face of the stop member 302 and the housing either. For this reason, the inner end of the stop member has guide slopes 328 which direct an abutting sheet corner towards inner ramp 322, and the groove bottom end has a chamfer 330 for the same reason.

## Claims

1. A container for a stack of sheets of a first size, said size being defined by a first pair of opposite parallel sheet edges and a second pair of opposite parallel sheet edges extending orthogonal to said first pair of edges, the container comprising:
   - a substantially rectangular housing provided with a display window of a size smaller than said first size,
   - a slider adapted to hold said stack of sheets and reciprocable relative to said housing in a direction parallel to said window and parallel to said first pair of edges between an inner end position and an outer end position, one sheet of a stack held by said slider being exposed beneath said window when said slider is in said inner end position,
   - stops provided on said slider for engagement with edges of said sheets and spaced from oneanother a predetermined distance to accomodate said first size, and
   - means for adapting said distance to a second, smaller size and for aligning sheets of said second size with respect to said window.

2. The container of claim 1 wherein said adapting means permit an incremental adaptation.

3. The container of claim 2 wherein said adapting means include adapter members.

4. The container of claim 3 wherein said adapter members are removeably mounted on said slider.

5. The container of claim 1 including means for cyclically rear-ranging a stack of sheets upon repeated reciprocation of said slider, wherein said adapting means are allocated to said sheet edges of said first pair.

6. The container of claim 5 for accomodation of non-square sheets and wherein said edges of said first pair are shorter than said edges of said second pair.

7. The container of claim 1 or claim 5 wherein said slider comprises edges extending in reciprocation direction and having an L-shaped cross section, each ledge including a sheet-supporting arm extending towards the sheet-supporting arm of the other ledge, and a guiding arm extending towards said display window, each guiding arm having an inner side forming one of said stops.

8. The container of claim 7 wherein said sheet-supporting arms have free ends spaced from oneanother by a width which is smaller than said distance after its being adapted to said second size.

9. The container of claim 3 or claim 4 wherein each adapter member has guide ramps for said engaging edges.

EP 0 475 229 A2

325   326                              120

308                310            123.75                      310
                                                              308
300                                                           300
302        304                                      304     302

127.5

**Fig. 1**

325                                120

                   310            127.5                       310
308                                                           308
300        304                                      304       300

135

**Fig. 2**

**Fig. 3**

Fig. 4

Fig. 5